# EUROPÄISCHE PATENTSCHRIFT

(11) **EP 3 022 991 B1**
(45) Veröffentlichungstag und Bekanntmachung des Hinweises auf die Patenterteilung: **21.10.2020**
(21) Anmeldenummer: 14795626.2
(22) Anmeldetag: 06.11.2014
(51) Int. Cl.: H05B 33/08

(54) **STEUERN EINES WENIGSTENS ZWEI HALBLEITERLICHTQUELLEN AUFWEISENDEN LEUCHTMITTELS**
CONTROLLING A LAMP HAVING AT LEAST TWO SEMICONDUCTOR LIGHT SOURCES
COMMANDE D'UN MOYEN D'ÉCLAIRAGE COMPORTANT AU MOINS DEUX SOURCES DE LUMIÈRE À SEMI-CONDUCTEUR

(30) Priorität: 20.11.2013 DE 102013223711
(43) Veröffentlichungstag der Anmeldung: 25.05.2016
(73) Patentinhaber: OSRAM GmbH, 80807 München (DE)
(72) Erfinder: KÜRSCHNER, Ronny, 93164 Laaber (DE); RICHTER, Jens, 93180 Deuerling (DE)
(86) Internationale Anmeldenummer: PCT/EP2014/073953
(87) Internationale Veröffentlichungsnummer: WO 2015/074891

(56) Entgegenhaltungen:
- WO-A1-2012/140634
- US-A1- 2006 120 080
- US-A1- 2009 225 020
- US-A1- 2011 267 375

## Beschreibung

### Technisches Gebiet

Die Erfindung betrifft eine Steuerungseinrichtung für ein wenigstens zwei Halbleiterlichtquellen aufweisendes und an eine elektrische Energiequelle anschließbares Leuchtmittel zum Wandeln einer von der elektrischen Energiequelle bereitgestellten elektrischen Leistung mittels der Halbleiterlichtquellen in eine von der bereitgestellten elektrischen Leistung abhängige, emittierte Lichtleistung, wobei die Halbleiterlichtquellen an die Steuerungseinrichtung angeschlossen sind und die Steuerungseinrichtung eingerichtet ist, die bereitgestellte elektrische Leistung einzustellen, indem die Steuerungseinrichtung einen Taktgeber aufweist, der ausgebildet ist, die Halbleiterlichtquellen in einem Taktbetrieb mit elektrischer Leistung zu beaufschlagen. Die Erfindung betrifft weiterhin eine Leuchtvorrichtung mit einem mehrere Halbleiterlichtquellen aufweisenden Leuchtmittel, einem elektrischen Anschluss zum Anschließen der Leuchtvorrichtung an eine elektrische Energiequelle sowie einer Steuerungseinrichtung, an die die Halbleiterlichtquellen angeschlossen sind. Weiterhin betrifft die Erfindung ein Verfahren zum Steuern eines wenigstens zwei Halbleiterlichtquellen aufweisenden und an eine elektrische Energiequelle angeschlossenen Leuchtmittels, wobei das Leuchtmittel eine von der elektrischen Energiequelle bereitgestellte elektrische Leistung mittels der Halbleiterlichtquellen in eine von der bereitgestellten elektrischen Leistung abhängige, emittierte Lichtleistung wandelt, die bereitgestellte elektrische Leistung mittels einer Steuerungseinrichtung eingestellt wird, indem die Halbleiterlichtquellen mittels der Steuerungseinrichtung mit elektrischer Leistung in einem Taktbetrieb beaufschlagt werden, wobei die Halbleiterlichtquellen gemäß den Halbleiterlichtquellen individuell zugeordneter Taktimpulsfolgen gesteuert werden. Schließlich betrifft die Erfindung noch ein Rechnerprogrammprodukt.

### Stand der Technik

Leuchtmittel der gattungsgemäßen Art sowie Steuerungseinrichtungen hierfür und Verfahren zu deren Steuerung sind dem Grunde nach im Stand der Technik umfänglich bekannt, so dass es eines gesonderten druckschriftlichen Nachweises hierfür nicht bedarf. Gattungsgemäße Leuchtmittel kommen unter anderem für Beleuchtungszwecke zum Einsatz, beispielsweise Ausleuchten von Räumen, von Arbeitsflächen oder dergleichen. Darüber hinaus werden solche Leuchtmittel auch zunehmend bei Fahrzeugen, zum Beispiel als Scheinwerfer oder dergleichen, eingesetzt. Das gattungsgemäße Leuchtmittel umfasst eine Mehrzahl von Halbleiterlichtquellen, die zur Erzielung eines gewünschten Beleuchtungseffekts mittels der Steuerungseinrichtung entsprechend angesteuert werden. Zu diesem Zweck sind die Halbleiterlichtquellen an die Steuerungseinrichtung angeschlossen. Aus der Steuerungseinrichtung werden die Halbleiterlichtquellen zugleich auch mit elektrischer Energie versorgt, so dass die Halbleiterlichtquellen entsprechend der ihnen zugeführten elektrischen Energie Licht erzeugen. Die erzeugte Lichtleistung ist dabei unter anderem abhängig von der der Halbleiterlichtquelle zugeführten elektrischen Leistung.

Um die Leistung in gewünschter Weise einstellen zu können, ist es bekannt, eine elektrische Spannung für die jeweilige Halbleiterlichtquelle zu verändern. Dieses Verfahren der Leistungssteuerung hat jedoch einige Nachteile zur Folge, beispielsweise einen hohen technischen Aufwand auf Seiten der Steuerungseinrichtung, um die gewünschte Spannung einstellen zu können, und starke chargenabhängige Helligkeitsschwankungen einzelner Halbleiterlichtquellen untereinander und/oder dergleichen, so dass sich dieses Verfahren zur Leistungssteuerung von Halbleiterlichtquellen im Wesentlichen nicht durchgesetzt hat.

Aus diesem Grund ist es verbreitet, die Halbleiterlichtquellen zum Zwecke der Leistungseinstellung mit elektrischer Leistung in einem Taktbetrieb zu beaufschlagen, so dass die Halbleiterlichtquellen im eingeschalteten Zustand jeweils in einem vorgegebenen, optimalen Arbeitspunkt betrieben werden können. Zu diesem Zweck sind die Halbleiterlichtquellen mit Taktimpulsfolgen beaufschlagt, wobei die Taktimpulsfolgen jeweils einer entsprechenden mittleren emittierten Lichtleistung zugeordnet sind. Ein Verfahren zur Einstellung der Leistung basiert zum Beispiel auf der Pulsweitenmodulation (PWM), wobei entsprechend der gewünschten einzustellenden Leistung ein entsprechendes Taktverhältnis eingestellt wird. Eine Taktrate der Taktimpulsfolge ist dabei derart gewählt, dass die bestimmungsgemäße Beleuchtungsfunktion hierdurch im Wesentlichen nicht beeinträchtigt ist.

Der vorgenannte Taktbetrieb kann jedoch Probleme hinsichtlich eines Berechnungsaufwands für die Taktimpulsfolgen oder dergleichen zur Folge haben, insbesondere wenn eine große Vielzahl von Taktimpulsfolgen für die Einstellung einer entsprechenden Vielzahl von Halbleiterlichtquellen erforderlich sind.

Die WO 2012/140634 A1 offenbart ein Verfahren zum PWM-Betrieb einer Vielzahl von LED mittels einer Steuervorrichtung, die ausgebildet ist, eine Phasenverschiebung zwischen den PWM-Signalen zu erzeugen, um Stromspitzen zu reduzieren.

### Darstellung der Erfindung

Das Leuchtmittel wandelt die von der elektrischen Energiequelle bereitgestellte elektrische Leistung mittels seiner Halbleiterlichtquellen in eine von der bereitgestellten elektrischen Leistung abhängige, emittierte Lichtleistung um. Zu diesem Zweck ist das Leuchtmittel an die elektrische Energiequelle angeschlossen, beispielsweise, indem das Leuchtmittel hierfür geeignete elektrische Anschlüsse aufweist, über die ein entsprechender Anschluss zur elektrischen Energiequelle herstellbar ist. Die elektrische Energiequelle kann beispielsweise ein öffentliches Energieversorgungsnetz, eine regenerative Energieerzeugungsanlage, beispielsweise eine Solaranlage, eine Windkraftanlage, aber auch eine Brennstoffzelle, ein Verbrennungsmotor-Generator-Satz, Kombinationen hiervon oder dergleichen sein.

Leuchtmittel der gattungsgemäßen Art weisen häufig eine Vielzahl von Halbleiterlichtquellen auf, die an die Steuerungseinrichtung angeschlossen sind. Zu diesem Zweck können entsprechende Verschaltungen vorgesehen sein, beispielsweise eine Reihenschaltung zumindest von Teilen der Halbleiterlichtquellen, eine Parallelschaltung, Kombinationen hiervon, insbesondere Matrixschaltungen, und/oder dergleichen.

Insbesondere bei Nutzung gattungsgemäßer Leuchtmittel im Bereich von Fahrzeugscheinwerfern beziehungsweise Frontscheinwerfern bei Fahrzeugen wie Automobilen ergibt sich eine Vielzahl von Vorteilen, wie beispielsweise die Realisierung eines Kurvenlichtes ohne die Notwendigkeit einer Mechanik, die Realisierung von sicherheitsrelevanten Funktionen und/oder dergleichen. Sicherheitsrelevante Funktionen können beispielsweise das Ausblenden eines entgegenkommenden Fahrzeuges zur Reduktion einer Blendwirkung oder das Herausheben von Gefahrenstellen und/oder -Situationen durch Erhöhung der Helligkeit in einem solchen Bereich umfassen. Darüber hinaus kann auch die Energieeffizienz vom Einsatz gattungsgemäßer Leuchtmittel profitieren, insbesondere, wenn nur der Teilbereich des Leuchtmittels angesteuert beziehungsweise aktiviert wird, der für die gewünschte Erzeugung einer Lichtverteilung im Unterschied zu Lösungen notwendig ist, bei denen eine gewünschte Lichtverteilung durch Beschneiden mittels Blenden bei einem klassischen Leuchtmittel erzeugt wird.

Der Erfindung liegt deshalb die Aufgabe zugrunde, ein Verfahren und ein Rechnerprogramm anzugeben, mit denen diesbezüglich eine Verbesserung erreicht werden kann.

Die Aufgabe wird durch ein Verfahren gemäß dem Anspruch 1 bzw. durch ein Rechnerprogrammprodukt gemäß dem Anspruch 6 gelöst. Weitere vorteilhafte Ausgestaltungen und Merkmale ergeben sich anhand der abhängigen Ansprüche.

Die Erfindung befasst sich insbesondere mit den Auswirkungen des Einsatzes von Halbleiterlichtquellen auf die elektrische Energieversorgung und die elektromagnetische Verträglichkeit. Halbleiterlichtquellen sind Lichtquellen, die aus einem Festkörper bestehen, der aufgrund seiner physikalischen Eigenschaften bei Beaufschlagung mit einem elektrischen Strom Licht erzeugt. Der Einsatz derartiger Halbleiterlichtquellen erfordert besondere Maßnahmen, um das Licht in gewünschter Weise erzeugen zu können und zugleich einen zuverlässigen, bestimmungsgemäßen Betrieb erreichen zu können. Zugleich weisen Halbleiterlichtquellen in der Regel sehr kleine Zeitkonstanten auf, wodurch sich erklärt, dass eine Änderung der zugeführten elektrischen Leistung häufig im Wesentlichen unmittelbar eine entsprechende Änderung der von der Halbleiterlichtquelle emittierten Lichtleistung zur Folge hat.

Steuerungseinrichtungsseitig wird mit der Erfindung deshalb insbesondere vorgeschlagen, dass die Steuerungseinrichtung für ein wenigstens zwei Halbleiterlichtquellen aufweisendes und an eine elektrische Energiequelle anschließbares Leuchtmittel zum Wandeln einer von der elektrischen Energiequelle bereitgestellten elektrischen Leistung mittels der Halbleiterlichtquellen in eine von der bereitgestellten elektrischen Leistung abhängige, emittierte Lichtleistung ausgebildet ist, wobei die Halbleiterlichtquellen an die Steuerungseinrichtung angeschlossen sind und die Steuerungseinrichtung eingerichtet ist, die bereitgestellte elektrische Leistung einzustellen, indem die Steuerungseinrichtung einen Taktgeber aufweist, der ausgebildet ist, die Halbleiterlichtquellen in einem Taktbetrieb mit elektrischer Leistung zu beaufschlagen und gemäß den Halbleiterlichtquellen individuell zugeordneter Taktimpulsfolgen zu steuern, wobei der Taktgeber eingerichtet ist, aus den Taktimpulsfolgen ein gemeinsames Impulsmuster zu bilden und die von dem Leuchtmittel emittierte Lichtleistung durch Auswahl eines der Lichtleistung zugeordneten Impulsmusters einzustellen. Die Steuerungseinrichtung kann als elektronische Schaltung, eine entsprechend programmierte Rechnereinheit, Kombinationen hiervon oder dergleichen gebildet sein. Sie kann ferner durch einen Halbleiterchip gebildet sein.

Auf diese Weise kann eine besonders einfache Steuerung erreicht werden, insbesondere, wenn das Leuchtmittel eine große Anzahl von Halbleiterlichtquellen aufweist, die eine ebenfalls große Anzahl von Taktimpulsfolgen erfordert. Beispielsweise können derartige Impulsmuster vorab gespeichert sein, so dass eine sehr schnelle Einstellung des Leuchtmittels auf die gewünschte Lichtleistung erreicht werden kann, ohne dass aufwendige Signalverarbeitungsmaßnahmen zur Ermittlung der jeweiligen Taktimpulsfolgen erforderlich wären. Dadurch kann steuerungseinrichtungsseitig Aufwand reduziert und/oder eine Einstellgeschwindigkeit erhöht werden.

Gemäß einem weiteren Aspekt der Erfindung können durch das Vorsehen von Taktimpulsfolgen die Auswirkungen des bestimmungsgemäßen Betriebs von Halbleiterlichtquellen auf die elektrische Energieversorgung deutlich reduziert werden. Häufig sind Halbleiterlichtquellen in einer Mehrzahl von einem Leuchtmittel umfasst. Die Halbleiterlichtquellen können in elektrischer Reihenschaltung, in elektrischer Parallelschaltung, in Mischformen hiervon, insbesondere Matrixschaltungen und/oder dergleichen verschaltet sein. Mit der Anzahl der Lichtquellen wird die maximale Lichtleistung des durch sie gebildeten Leuchtmittels bestimmt. Insbesondere kann durch die Verschaltung erreicht werden, dass eine Unteranzahl von Halbleiterlichtquellen des Leuchtmittels jeweils gemeinsam mittels einer Taktimpulsfolge angesteuert werden kann.

Die Halbleiterlichtquellen sind an die elektrische Steuerungseinrichtung angeschlossen und werden von dieser mit elektrischer Energie beaufschlagt, um ihre bestimmungsgemäße Lichterzeugungsfunktion in bestimmungsgemäßer Weise ausführen zu können. Zu diesem Zweck können die Halbleiterlichtquellen einzeln oder auch gruppenweise an die Steuerungseinrichtung angeschlossen sein. Bei einem gruppenweisen Anschluss an die Steuerungseinrichtung sind die Halbleiterlichtquellen der Gruppe nur gemeinsam mittels einer Taktimpulsfolge betreibbar.

Die elektrische Energiequelle stellt die Leistung bereit, die für den bestimmungsgemäßen Betrieb des Leuchtmittels erforderlich ist, welches vorzugsweise die bereitgestellte elektrische Leistung ist. Die bereitgestellte Leistung umfasst demnach insbesondere die elektrische Leistung, die sich durch die Beaufschlagung der Halbleiterlichtquellen mit elektrischer Leistung durch die Steuerungseinrichtung ergibt. Ergänzend kann auch eine elektrische Leistung der Steuerungseinrichtung sowie weiterer erforderlicher Komponenten umfasst sein. Die bereitgestellte elektrische Leistung der elektrischen Energiequelle ist vorzugsweise die in einem im Wesentlichen stationären Betriebszustand des Leuchtmittels und/oder der Steuerungseinrichtung an dieses beziehungsweise diese abgegebene elektrische Leistung.

Die Steuerungseinrichtung weist für die an sie angeschlossenen Halbleiterlichtquellen oder Gruppen von Halbleiterlichtquellen elektronische Schaltelemente auf, die die Halbleiterlichtquellen bestimmungsgemäß mit einer elektrischen Leistung beziehungsweise einem elektrischen Strom beaufschlagen. Die elektronischen Schaltelemente sind in der Regel als Halbleiterschalter ausgebildet. Sie können aber auch als Nanoschaltelemente, Kombinationen hiervor oder dergleichen ausgebildet sein. Die Schaltelemente können als separate Baugruppe vorgesehen oder aber auch einstückig mit der Steuerungseinrichtung ausgebildet sein. Beispielsweise können die Schaltelemente als elektronische Schaltung, Halbleiterchip, Kombinationen hiervon oder dergleichen vorgesehen sein.

Halbleiterschalter im Sinne dieser Offenbarung sind vorzugsweise steuerbare elektronische Schaltelemente, beispielsweise ein Transistor, insbesondere bipolarer Transistor, ein Thyristor, Kombinationsschaltungen hiervon beispielsweise ein Metaloxid Semiconductor Feldeffekttransistor (MOSFET), ein Isolated Gate Bipolar Transistor (IGBT) oder dergleichen.

Der Schaltbetrieb des Halbleiterschalters bedeutet, dass in einem eingeschalteten Zustand zwischen den die Schaltstrecke bildenden Anschlüssen des Halbleiterschalters ein sehr geringer elektrischer Widerstand bereitgestellt wird, so dass ein hoher Stromfluss bei sehr kleiner Restspannung möglich ist. Im ausgeschalteten Zustand ist die Schaltstrecke des Halbleiterschalters hochohmig, das heißt, sie stellt einen hohen elektrischen Widerstand bereit, so dass auch bei hoher, an der Schaltstrecke anliegender Spannung im Wesentlichen kein oder nur ein sehr geringer, insbesondere vernachlässigbarer Stromfluss vorliegt. Hiervon unterscheidet sich ein Linearbetrieb, der aber bei elektronischen Schaltelementen nicht zum Einsatz kommt.

Vorzugsweise bestimmt die Anzahl der mittels der Steuerungseinrichtung eingeschalteten Schaltelemente die von der elektrischen Energiequelle bereitgestellte Leistung. Es kann darüber hinaus vorgesehen sein, dass die Steuerungseinrichtung die elektrische Energiequelle in Bezug auf die Leistungsbereitstellung steuert. Ein Steuern kann auch für einen getakteten elektronischen Energiewandler vorgesehen sein, mittels dem die von der elektrischen Energiequelle bereitgestellte elektrische Leistung in eine für die Steuerungseinrichtung geeignete elektrische Leistung gewandelt wird.

Natürlich kann auch vorgesehen sein, dass sämtliche Halbleiterlichtquellen jeweils einzeln und individuell an die Steuerungseinrichtung angeschlossen sind. Auf diese Weise kann jede Halbleiterlichtquelle in gewünschter Weise von der Steuerungseinrichtung individuell angesteuert werden. Insbesondere kann auch hierbei vorgesehen sein, dass Gruppen von Halbleiterlichtquellen gebildet werden, die mit einer gemeinsamen Taktimpulsfolge von der Steuerungseinrichtung gesteuert werden. Dies hat den Vorteil, dass die Gruppenbildung von der Steuerungseinrichtung selbst festgelegt werden kann und gegebenenfalls bedarfsweise angepasst werden kann, indem einzelne oder mehrere Halbleiterlichtquellen der Gruppe hinzugefügt beziehungsweise aus der Gruppe entfernt werden.

Auch wenn im Weiteren die Erfindung anhand von Fahrzeugscheinwerfern als Leuchtvorrichtung weiter erläutert werden wird, sind die Ausführungen jedoch nicht auf Fahrzeugscheinwerfer begrenzt und können natürlich auch bei beliebigen anderen Leuchtvorrichtungen beziehungsweise Leuchtmitteln zum Einsatz kommen.

Mit der Erfindung ist es möglich, eine sich dynamisch ändernde Lichtverteilung des Leuchtmittels zu erreichen, die durch eine entsprechende Ansteuerung der Halbleiterlichtquellen des Leuchtmittels erreicht werden kann. Mit der sich ändernden Lichtverteilung des Leuchtmittels ändert sich auch die Verteilung der elektrischen Leistung über das Leuchtmittel, das heißt, die lokale Leistungsdichte, und zwar über die vom Leuchtmittel umfassten Halbleiterlichtquellen.

Bei einem Fahrzeugscheinwerfer kann sich zum Beispiel ein Strombedarf im zeitlichen Mittel von ungefähr 13 bis 16A bei einer typischen Lichtverteilung einstellen, wobei ein solcher Fahrzeugscheinwerfer bei maximaler Lichterzeugung zum Beispiel einen elektrischen Strom in einem Bereich von 33 bis 38A benötigen kann. Die Differenz zwischen den beiden vorgenannten Werten des elektrischen Stroms wird als Reserve angesehen, die zum Beispiel für die Ausleuchtung beim Kurvenfahren bereitgehalten werden kann. Dadurch ist es möglich, auch einen Schwenkbereich beim Kurvenfahren mit einem solchen Fahrzeugscheinwerfer zweckmäßig auszuleuchten und so die Fahrsicherheit insgesamt zu verbessern.

Daraus folgt, dass sich natürlich auch die Stromverteilung beziehungsweise die Leistungsverteilung über die das Leuchtmittel bildenden Halbleiterlichtquellen in Abhängigkeit einer Fahrsituation dynamisch ändert.

Halbleiterlichtquellen weisen die Eigenschaft auf, dass deren Lichterzeugung im Wesentlichen unmittelbar von der zugeführten elektrischen Leistung beziehungsweise dem zugeführten elektrischen Strom abhängig ist. Entsprechend sind Zeitkonstante bei Änderung eines Beleuchtungszustands des Leuchtmittels sehr klein.

Ein Leuchtmittel der gattungsgemäßen Art für einen Fahrzeugscheinwerfer kann beispielsweise 3.000 oder mehr Halbleiterlichtquellen aufweisen, die von der Steuerungseinrichtung vorzugsweise individuell mittels einer, vorzugsweise individuellen, Taktimpulsfolge in Form einer Pulsweitenmodulation (PWM) angesteuert werden kann. Die Energieversorgung der einzelnen Halbleiterlichtquellen erfolgt parallel von der elektrischen Energiequelle, an die das Leuchtmittel angeschlossen ist.

Aufgrund der Vielzahl der Halbleiterlichtquellen und der geforderten Dynamik sowie Effizienz des hierdurch gebildeten Systems ergeben sich besondere Anforderungen an eine elektrische Schaltung der Steuerungseinrichtung, mittels der die geforderten beziehungsweise gewünschten Betriebszustände des Leuchtmittels realisiert werden können. Es ist deshalb ein wesentlicher Aspekt der Erfindung, hier eine Verbesserung zu bewirken, so dass Anforderungen an die elektronische Schaltung deutlich reduziert werden können, ohne die Möglichkeiten des Leuchtmittels, beispielsweise bei einer Applikation als Fahrzeugscheinwerfer, zu beschränken. Auch wenn dieser erfinderische Aspekt bei einer großen Anzahl von Halbleiterlichtquellen besonders ausgeprägt ist, sind die vorteilhaften Wirkungen natürlich auch bei einer kleinen Anzahl von Halbleiterlichtquellen - beispielsweise zwei oder mehrere - nachweisbar.

Die Steuerungseinrichtung kann beispielsweise zu diesem Zweck einen steuerbaren, elektronischen getakteten Energiewandler, beispielsweise einen Tiefsetzsteller, einen Hochsetzsteller oder dergleichen, umfassen, der vorzugsweise durch die elektronische Schaltung umfasst ist. Der elektronischen getakteten Energiewandler bezieht die elektrische Leistung vorzugsweise unmittelbar von der elektrischen Energiequelle.

Darüber hinaus ist zu beachten, dass die Komplexität der Ansteuerung eines solchen Fahrzeugscheinwerfers sowie auch entsprechender Leuchtmittel im Allgemeinen, und der damit verbundenen, vorzuhaltenden Signalverarbeitungsleistung neue Ansätze erfordert, die insbesondere den getakteten elektronischen Energiewandler vorausschauend zu regeln vermögen.

Ein Aspekt der Erfindung ist die zeitliche Verschiebung von Taktimpulsfolgen für die einzelnen Halbleiterlichtquellen gegenüber einander, mit dem Ziel, Lastsprünge beziehungsweise Leistungssprünge, insbesondere am Beginn eines jeweiligen Taktzyklus, reduzieren zu können. Die Erfindung ist aber nicht nur hierauf beschränkt zu sehen, sondern dient im Allgemeinen dazu, auch Betriebszustände der Erzeugung von Lichtleistung mittels des Leuchtmittels zu erfassen, und zwar insbesondere Übergänge von einem Lichterzeugungszustand in einen anderen Lichterzeugungszustand. Letzteres kann beispielsweise gemäß der Erfindung dadurch erreicht werden, dass die Taktimpulsfolgen für die Halbleiterlichtquellen für einen bestimmten Beleuchtungszustand des Leuchtmittels zu Impulsmustern zusammengefasst werden und bei Übergang von einem Lichterzeugungszustand zu einem anderen Lichterzeugungszustand des Leuchtmittels Impulsmuster zwischengeschaltet werden, die ein abruptes Ändern der zugeführten elektrischen Leistung abmildern.

Mit der Erfindung kann ferner erreicht werden, dass Anforderungen an den elektronischen getakteten Energiewandler deutlich reduziert werden können. Insbesondere können Anforderungen an eine Leistungselektronik eines Tiefsitzstellers reduziert werden. Darüber hinaus kann durch eine Interpolation von Zustandsübergängen mittels zwischengeschalteter Impulsmuster beziehungsweise einer Anpassung von Lastsprüngen beziehungsweise Leistungssprüngen auf die tatsächlich geforderte Dynamik während beispielsweise einer Kurvenfahrt die Dynamik der Leistungsaufnahme des Leuchtmittels beziehungsweise der Stromaufnahme des Leuchtmittels reduzieren. Ferner kann durch die Verschiebung von PWM-Zyklen beziehungsweise Taktimpulsfolgen der einzelnen Halbleiterlichtquellen zueinander eine Reduktion des maximal bereitzustellenden Summenstroms beziehungsweise der maximal bereitzustellenden Summenleistung über die gesamte Halbleiterlichtquellenstruktur des Leuchtmittels erreicht werden.

Besonders vorteilhaft erweist es sich, wenn beide vorgenannten Aspekte miteinander kombiniert werden, wodurch die Anforderungen an die elektrische Energiequelle beziehungsweise den elektronischen getakteten Energiewandler deutlich reduziert werden können. Einerseits kann vermieden werden, dass der elektronische getaktete Energiewandler die vollständige Dynamik des Leuchtmittels abbilden muss und die vorzuhaltende Leistungsreserve entsprechend ausgelegt sein muss. Dadurch kann der Aufwand bezüglich des elektronischen getakteten Energiewandlers reduziert werden, wodurch sich geringere Kosten ergeben. Darüber hinaus können Rückwirkungen auf die elektrische Energiequelle, insbesondere auf ein Energieversorgungsnetz, reduziert werden. Besonders vorteilhaft erweist sich dies bei Inselnetzen, beispielsweise einem Bordnetz eines Fahrzeugs oder dergleichen. Beispielsweise kann der Aufwand für eine Filterung reduziert werden.

Die Erfindung schlägt weiterhin vor, dass die Steuerungseinrichtung einen mittels der Steuerungseinrichtung steuerbaren, elektronischen getakteten Energiewandler umfasst. Durch die Möglichkeit der Steuerung des elektronischen getakteten Energiewandlers mittels der Steuerungseinrichtung kann erreicht werden, dass dieser adaptiv, insbesondere proaktiv gesteuert wird, so dass auf Zustandsänderungen, insbesondere Lichterzeugungszustandsänderungen, des Leuchtmittels besser reagiert werden kann. Dadurch kann Aufwand im Bereich des elektronischen getakteten Energiewandlers, beispielsweise im Bereich der Filterung und/oder dergleichen reduziert werden.

Die Halbleiterlichtquelle kann vorzugsweise eine Leuchtdiode oder eine Laserdiode aufweisen. Solche Leuchtdioden beziehungsweise Laserdioden können auch kombiniert miteinander in modularer Weise zusammengefasst sein. Insbesondere können sie auf einem gemeinsamen Chip oder dergleichen ausgebildet sein. Leuchtdioden beziehungsweise Laserdioden oder Kombinationen hiervon eignen sich insbesondere für den Einsatz als Halbleiterlichtquelle bei der Erfindung.

Leuchtvorrichtungsseitig wird mit der Erfindung folglich insbesondere vorgeschlagen, dass die Leuchtvorrichtung ein mehrere Halbleiterlichtquellen aufweisendes Leuchtmittel, einen elektrischen Anschluss zum Anschließen der Leuchtvorrichtung an eine elektrische Energiequelle sowie eine Steuerungseinrichtung aufweist, an die die Halbleiterlichtquellen angeschlossen sind. Die Steuerungseinrichtung ist nach der Erfindung ausgebildet. Die Leuchtvorrichtung kann beispielsweise durch einen Fahrzeugscheinwerfer, ein Fahrzeugrücklicht, aber auch durch eine Lampe für eine Raumbeleuchtung oder dergleichen gebildet sein. Die Leuchtvorrichtung selbst kann beispielsweise dazu ausgebildet sein, das Leuchtmittel lösbar aufzunehmen und elektrisch zu kontaktieren. Beispielsweise kann das Leuchtmittel als austauschbare Einheit beziehungsweise austauschbares Modul ausgebildet sein. Insbesondere kann das Leuchtmittel über eine Anschlussfassung verfügen, mit der es zugleich sowohl mechanisch als auch elektrisch mit der Leuchtvorrichtung verbunden werden kann. Auf diese Weise ist es möglich, ein defektes Leuchtmittel der Leuchtvorrichtung gegen ein intaktes Leuchtmittel auszutauschen. Darüber hinaus erlaubt es diese Ausgestaltung, die Erfindung auch bei vorhandenen Leuchtvorrichtungen nachzurüsten.

Steuerungseinrichtungsseitig wird mit der Erfindung deshalb insbesondere vorgeschlagen, dass die Steuerungseinrichtung für ein wenigstens zwei Halbleiterlichtquellen aufweisendes und an eine elektrische Energiequelle anschließbares Leuchtmittel zum Wandeln einer von der elektrischen Energiequelle bereitgestellten elektrischen Leistung mittels der Halbleiterlichtquellen in eine von der bereitgestellten elektrischen Leistung abhängige, emittierte Lichtleistung geeignet ist, wobei die Halbleiterlichtquellen an die Steuerungseinrichtung angeschlossen sind und die Steuerungseinrichtung eingerichtet ist, die bereitgestellte elektrische Leistung einzustellen, indem die Steuerungseinrichtung einen Taktgeber aufweist, der ausgebildet ist, die Halbleiterlichtquellen in einem Taktbetrieb mit elektrischer Leistung zu beaufschlagen, wobei der Taktgeber eingerichtet ist, die Halbleiterlichtquellen gemäß den Halbleiterlichtquellen individuell zugeordneter Taktimpulsfolgen derart zu steuern, dass Taktimpulse einer ersten Taktimpulsfolge zeitlich verschoben zu Taktimpulsen einer zweiten Taktimpulsfolge liegen. Die Steuerungseinrichtung kann als elektronische Schaltung, eine entsprechend programmierte Rechnereinheit, Kombinationen hiervon oder dergleichen gebildet sein. Sie kann ferner durch einen Halbleiterchip gebildet sein.

Vorzugsweise sind die Taktimpulsfolgen jeweils einer einzigen Halbleiterlichtquelle zugeordnet. Es kann aber auch vorgesehen sein, dass die Taktimpulsfolgen zwei oder mehreren Halbleiterlichtquellen zugeordnet sind. Diese Ausgestaltung ist insbesondere dann zweckmäßig, wenn Halbleiterlichtquellen zu Gruppen zusammengefasst gesteuert werden sollen.

Die Erfindung ist natürlich nicht auf die Anwendung bei zwei Halbleiterlichtquellen beschränkt, sondern kann insbesondere natürlich bei Leuchtmitteln mit einer Vielzahl von Halbleiterlichtquellen zweckmäßig zum Einsatz kommen. Besonders bei einer sehr großen Anzahl von Halbleiterlichtquellen des Leuchtmittels können die erfindungsgemäßen Vorteile besonders deutlich hervortreten. Dem Grunde nach kann für jede Halbleiterlichtquelle eine eigene individuelle Taktimpulsfolge vorgesehen sein. In diesem Fall ist jede Halbleiterlichtquelle an die Steuerungseinrichtung direkt angeschlossen, so dass sie von letzterer mit der der Halbleiterlichtquelle zugeordneten Taktimpulsfolge beaufschlagt werden kann. Es kann natürlich auch vorgesehen sein, dass eine vorgegebene Anzahl von Halbleiterlichtquellen gemeinsam elektrisch verschaltet ist und gemeinsam an einem Anschluss der Steuerungseinrichtung angeschlossen ist. In diesem Fall sind die gemeinsam an die Steuerungseinrichtung angeschlossenen Halbleiterlichtquellen gemeinsam mit einer gemeinsamen für diese Gruppe individuellen Taktimpulsfolge steuerbar. Durch die gemeinsame Verschaltung ist eine fest eingestellte hardwareseitige Gruppe gebildet, die immer gemeinsam mit einer einzigen Taktimpulsfolge gesteuert wird. Darüber hinaus können natürlich auch einzelne einzeln an die Steuerungseinrichtung angeschlossene Halbleiterlichtquellen wahlweise durch die Steuerungseinrichtung mit dem gleichen Taktimpulsmuster beaufschlagt werden. Dadurch lassen sich besondere Lichteffekte erzielen. Insbesondere kann ein Mischbetrieb vorgesehen sein, bei dem einige der Halbleiterlichtquellen mit individuellen Taktimpulsmustern und andere mit einem gemeinsamen Taktimpulsmuster beaufschlagt sind.

Der zeitliche Versatz der Taktimpulsfolgen kann derart gewählt sein, dass sich Taktimpulse unterschiedlicher Taktimpulsfolgen überlappen oder auch nicht. Darüber hinaus kann vorgesehen sein, dass eine Taktimpulsfolge zeitlich variable Taktimpulse aufweist, die sich sowohl hinsichtlich ihrer Zeitdauer als auch hinsichtlich ihres zeitlichen Abstands zu benachbarten Taktimpulsen voneinander unterscheiden. Beispielsweise kann vorgesehen sein, dass eine Taktimpulsfolge über eine variabel einstellbare Zeit gegenüber einer anderen Taktimpulsfolge verschoben sein kann. Vorzugsweise sind mehr als zwei Taktimpulsfolgen vorhanden, die gegeneinander entsprechend zeitlich versetzt sind. Es kann jedoch auch vorgesehen sein, dass bei mehr als zwei Taktimpulsfolgen lediglich zwei der Taktimpulsfolgen gegeneinander zeitlich versetzt sind. Auch weitere Kombinationen können diesbezüglich vorgesehen sein.

Ein Vorteil der beschriebenen technischen Merkmale ist, dass eine Reduktion von Anforderungen an den steuerbaren, elektronischen getakteten Energiewandler erreicht werden kann. Durch die Interpolation von Bildübergängen beziehungsweise Impulsmustern mittels Zwischenwerten beziehungsweise Anpassen von Lastsprüngen auf eine tatsächlich erforderliche Dynamik kann die Dynamik der Strombeanspruchung beziehungsweise Leistungsbeanspruchung reduziert werden. Durch die Verschiebung von PWM-Zyklen der einzelnen Halbleiterlichtquellen zueinander ergibt sich eine Reduktion des maximal bereitzustellenden Summenstroms über die gesamte Halbleiterlichtquellenstruktur des Leuchtmittels.

Beide Maßnahmen ermöglichen eine effizientere Auslegung des steuerbaren, elektronischen getakteten Energiewandlers, weil dieser nicht die vollständige Dynamik des Systems, welches durch das Leuchtmittel gebildet ist, abzubilden braucht und eine Leistungsreserve reduziert werden kann. Hierdurch lässt sich die Komplexität des steuerbaren, elektronischen getakteten Energiewandlers reduzieren, wodurch Kosten eingespart werden können.

Darüber hinaus können Rückwirkungen auf ein Energieversorgungsnetz beziehungsweise die elektrische Energiequelle reduziert werden. Insbesondere kann Filteraufwand reduziert werden.

Entsprechend schlägt die Erfindung verfahrensseitig insbesondere ein Verfahren zum Steuern eines wenigstens zwei Halbleiterlichtquellen aufweisenden und an eine elektrische Energiequelle angeschlossenen Leuchtmittels vor, wobei
- das Leuchtmittel eine von der elektrischen Energiequelle bereitgestellte elektrische Leistung mittels der Halbleiterlichtquellen in eine von der bereitgestellten elektrischen Leistung abhängige, emittierte Lichtleistung wandelt,
- die bereitgestellte elektrische Leistung mittels einer Steuerungseinrichtung eingestellt wird, indem die Halbleiterlichtquellen mittels der Steuerungseinrichtung mit elektrischer Leistung in einem Taktbetrieb beaufschlagt werden,

die Halbleiterlichtquellen gemäß den Halbleiterlichtquellen individuell zugeordneter Taktimpulsfolgen gesteuert werden, wobei
- dass die Taktimpulsfolgen ein gemeinsames Impulsmuster bilden und die von dem Leuchtmittel emittierte Lichtleistung durch Auswahl eines der Lichtleistung zugeordneten Impulsmusters eingestellt wird.

Die zur Steuerungseinrichtung genannten Vorteile und Ausbildungen gelten gleichermaßen für das erfindungsgemäße Verfahren.

Gemäß einer Weiterbildung wird vorgeschlagen, dass zum Ändern der von dem Leuchtmittel emittierten Lichtleistung von einem ersten einer ersten emittierten Lichtleistung zugeordneten Impulsmuster auf ein zweites, einer zweiten emittierten Lichtleistung zugeordneten Impulsmuster umgeschaltet wird. Dadurch ist es möglich, auf besonders einfache Weise die emittierte Lichtleistung des Leuchtmittels in gewünschter Weise zu ändern. Beispielsweise können vorgespeicherte Impulsmuster genutzt werden, so dass ein Signalverarbeitungsaufwand, insbesondere Rechneraufwand, reduziert werden kann.Besonders vorteilhaft erweist es sich jedoch, wenn ein Algorithmus zur Ermittelung geeigneter Impulsmuster genutzt wird, um Impulsmuster in Abhängigkeit der gewünschten Lichtverteilung zu ermitteln. Auf Basis des Algorithmus kann ein Rechnerprogramm erstellt sein, welches der Rechnereinheit des Taktgebers erlaubt, eine Vielzahl unterschiedlicher Impulsmuster ohne großen Zeitaufwand ermitteln zu können. Ebenso kann vorgesehen sein, dass ein Field Programmable Gate Array (FPGA) gemäß eines solchen Algorithmus programmiert wird und bei Einsatz im Taktgeber die der gewünschten Lichtverteilung entsprechenden Impulsmuster ermittelt und bereitstellt.

Darüber hinaus wird mit der Erfindung vorgeschlagen, dass das Umschalten vom ersten auf das zweite Impulsmuster ein Zwischenschalten wenigstens eines dritten Impulsmusters umfasst, welches einer Lichtleistung zwischen der ersten und der zweiten Lichtleistung zugeordnet ist. Dadurch ist es möglich, Schaltvorgänge zwischen dem ersten Impulsmuster und dem zweiten Impulsmuster dahingehend zu beeinflussen, dass große Strom- und/oder Lichtschwankungen reduziert werden können. Darüber hinaus lässt sich hierdurch ein sanftes, ergonomisch visuell günstiges Umschalten beziehungsweise Ändern der Lichtleistung erreichen. Schließlich können Anforderungen an die elektrische Energiequelle, insbesondere auch an den getakteten elektronischen Energiewandler, reduziert werden.

Besonders vorteilhaft erweist es sich gemäß einem weiteren Aspekt der Erfindung, wenn die Taktimpulse einer ersten Taktimpulsfolge in Taktpausen einer zweiten Taktimpulsfolge liegen. In diesem Fall kann eine besonders günstige Belastung auf der elektrischen Seite des Leuchtmittels erreicht werden, weil Spitzenleistungen beziehungsweise Spitzenströme reduziert werden können. Besonders vorteilhaft erweist sich dies auch, wenn die Halbleiterlichtquellen im Wesentlichen gleiche physikalische Eigenschaften aufweisen. Aber auch bei abweichenden physikalischen Eigenschaften können mit der Erfindung vorteilhafte Aspekte umgesetzt werden. Mit diesem Aspekt kann darüber hinaus erreicht werden, dass Netzrückwirkungen, beispielsweise Oberschwingungen auf der elektrischen Seite, reduziert werden können.

Gemäß einem weiteren Aspekt der Erfindung wird vorgeschlagen, dass an einem, vorzugsweise jedem, Taktimpuls der ersten Taktimpulsfolge jeweils ein Taktimpuls der zweiten Taktimpulsfolge zeitlich unmittelbar anschließt. Dadurch kann eine weitere Verbesserung auf der elektrischen Seite des Leuchtmittels erreicht werden, weil einerseits eine Leistungsbeanspruchung beziehungsweise Strombeanspruchung weiter reduziert werden kann und zugleich auch erreicht werden kann, dass hochfrequente Ströme reduziert werden können.

Gemäß einer weiteren Ausgestaltung der Erfindung wird vorgeschlagen, dass die Taktimpulse der ersten Taktimpulsfolge über eine von den Taktimpulsen der zweiten Taktimpulsfolge abweichende Zeitdauer andauern. Dies erlaubt es, die mit der jeweiligen Taktimpulsfolge beaufschlagten Halbleiterlichtquellen mit unterschiedlicher Leistung zu betreiben, so dass die entsprechenden Halbleiterlichtquellen eine unterschiedliche Lichtleistung erzeugen.

Der Begriff Leistung im Sinne dieser Anmeldung meint eine mittlere Leistung, die über eine zeitliche Mittelung ermittelt wird, deren Zeitraum deutlich größer ist als der Zeitraum einer Taktperiode der jeweiligen Taktimpulsfolge, zum Beispiel für fünf, zehn oder auch mehr Taktperioden der Taktimpulsfolge.

Die in diesem Sinne definierte Leistung ist sowohl auf elektrischer Seite als auch auf lichttechnischer Seite anwendbar. Vorzugsweise ist der Zeitraum der Mittelung derart bemessen, dass die durch eine Taktimpulsfolge bewirkte Lichtemission der entsprechenden Halbleiterlichtquelle einen kontinuierlichen visuellen Effekt in einem vorliegenden im Wesentlichen stationären Lichterzeugungszustand am menschlichen Auge erzeugt, sofern die Taktimpulsfolge eine stationäre Taktimpulsfolge ist, die einer entsprechenden Leistung zugeordnet ist und dadurch einen entsprechenden Betriebszustand definiert.

Als besonders vorteilhaft erweist es sich, dass mit der Erfindung die von der elektrischen Energiequelle bereitgestellte elektrische Leistung mittels eines elektronischen getakteten Energiewandlers gewandelt wird, wobei der elektronische getaktete Energiewandler mittels der Steuerungseinrichtung proaktiv gesteuert wird. Dadurch kann Aufwand bezüglich des elektronischen getakteten Energiewandlers weiter reduziert werden, weil der Wandler an die bevorstehende Änderung der Energiebereitstellung entsprechend angepasst werden kann. Dadurch lässt sich nicht nur Aufwand bezüglich des Energiewandlers und gegebenenfalls einer Filterung reduzieren, sondern es kann auch eine günstigerer Übergang bezüglich der Leistungsänderung des Leuchtmittels erreicht werden. Proaktiv meint, dass der elektronische getaktete Energiewandler vor Eintreten einer Beanspruchungsänderung, insbesondere einer Leistungsänderung an die bevorstehende Beanspruchung adaptiv angepasst wird.

Eine Weiterbildung sieht vor, dass das proaktive Steuern ein Übermitteln eines geeigneten Steuersignals an den elektronischen getakteten Energiewandler umfasst, bevor eine Taktimpulsfolge und/oder ein Impulsmuster mittels der Steuerungseinrichtung aktiviert werden. Dadurch kann der elektronische getaktete Energiewandler noch besser auf die Änderung angepasst werden.

Schließlich wird mit der Erfindung insbesondere ein Rechnerprogrammprodukt umfassend ein Programm für eine Rechnereinheit eines Taktgebers einer Steuerungseinrichtung vorgeschlagen, wobei das Programm Programmcodeabschnitte eines Programms zum Ausführen der Schritte des erfindungsgemäßen Verfahrens aufweist, wenn das Programm durch die Rechnereinheit ausgeführt wird. Vorzugsweise sind die Programmcodeabschnitte anhand eines Algorithmus erstellt. Der Algorithmus stellt zum Beispiel eine Vorschrift bereit, gemäß der die Rechnereinheit mittels des den Algorithmus realisierenden Programms Taktimpulsfolgen, Impulsmuster und/oder dergleichen ermittelt und bereitstellt.

Das vorgenannte Rechnerprogrammprodukt kann als rechnerlesbares Speichermedium ausgebildet sein. Darüber hinaus kann das Programm direkt in einen internen Speicher der Rechnereinheit ladbar sein. So ist es beispielsweise möglich, das Programm aus einem Netzwerk von einer Datenquelle, beispielsweise einem Server, herunterzuladen und in einen internen Speicher der Rechnereinheit zu laden, so dass der Rechner das Programm ausführen kann.

Vorzugsweise umfasst das Rechnerprogrammprodukt ein rechnerlesbares Medium, auf welchem Programmcodeabschnitte gespeichert sind. Ein solches rechnerlesbares Medium kann beispielsweise ein Speicherbaustein, eine Compact Disc, ein USB-Stick, oder dergleichen sein.

### Kurze Beschreibung der Zeichnungen

Weitere Vorteile und Merkmale sind der folgenden Beschreibung von Ausführungsbeispielen anhand der Figuren zu entnehmen. Die Ausführungsbeispiele dienen lediglich der Erläuterung der Erfindung und sollen diese nicht beschränken. In den Figuren sind gleiche Bauteile und Funktionen mit gleichen Bezugszeichen bezeichnet.

Es zeigen:
- Fig. 1: in einer schematischen Ansicht einen Fahrzeugscheinwerfer als Leuchtvorrichtung mit einer Leuchtdiodenmatrix als Leuchtmittel, wobei die Leuchtdioden als Halbleiterlichtquellen zu Matrizen verschaltet sind in einem ersten Betriebszustand,
- Fig. 2: der Fahrzeugscheinwerfer gemäß Fig. 1 in einem zweiten Betriebszustand,
- Fig. 3: ein Prinzipschaltbild für eine Steuerungseinrichtung gemäß der Erfindung,
- Fig. 4: eine schematische Darstellung eines prozentualen Anteils einer jeweiligen Graustufe an einer Grundlichtverteilung des Scheinwerfers gemäß Fig. 1,
- Fig. 5: eine schematische Darstellung in einem oberen Diagramm von einem Zeitverlauf eines elektrischen Stroms für ein Leuchtmittel sowie in einer unteren Darstellung ein Diagramm mit entsprechenden Taktimpulsfolgen für die jeweiligen Leuchtdioden,
- Fig. 6: eine Darstellung wie Fig. 5, wobei die Taktimpulsfolgen gemäß der Erfindung gewählt sind,
- Fig. 7: schematisch zwei übereinander angeordnete Diagramme, wobei ein oberes Diagramm eine Stromaufnahme des Leuchtmittels über der Zeit bei unterschiedlichen Impulsmustern zeigt und die untere Darstellung ein Diagramm bezüglich einer Änderung der Phasenlage von PWM-Kanälen für die einzelnen Leuchtdioden darstellt,
- Fig. 8: zwei übereinander angeordnete Diagramme, wobei ein oberes Diagramm den vom Leuchtmittel aufgenommenen Strom über der Zeit und das untere Diagramm entsprechende Steuersignale für Leuchtdioden des Leuchtmittels über der Zeit darstellt,
- Fig. 9: zwei übereinander angeordnete Diagramme wie Fig. 8, wobei im oberen Diagramm ein Stromverlauf bei zwischengeschalteten Impulsmustern und im unteren Diagramm entsprechend zugeordnete Steuersignale für die Leuchtdioden des Leuchtmittels schematisch dargestellt sind,
- Fig. 10: ein schematisches Blockschaltbild für eine elektronische Schaltung einer Registeranordnung zur Ansteuerung von acht Leuchtdioden,
- Fig. 11: eine auf einer Registeransteuerung gemäß Fig. 7 basierende Logiktabelle für Steuersignale für die acht Leuchtdioden, die mit dem Registersatz gemäß Fig. 10 erzeugt werden,
- Fig. 12: eine Darstellung wie Fig. 11, wobei die PWM-Kanäle für die Leuchtdioden gemäß der Erfindung versetzt sind,
- Fig. 13: eine schematische Darstellung von Impulsmustern für ein Einschalten des Leuchtmittels,
- Fig. 14: ein Einschaltvorgang wie Fig. 13, jedoch mit Zwischenschaltung von Impulsmustern gemäß der Erfindung,
- Fig. 15: schematisch eine konventionelle Ansteuerung wie Fig. 13, und
- Fig. 16: eine schematische Darstellung einer weiteren Ausgestaltung der Erfindung, bei der mehrere Impulsmuster beim Einschalten des Leuchtmittels zur Realisierung einer Dimmfunktion zwischengeschaltet werden.

### Bevorzugte Ausführung der Erfindung

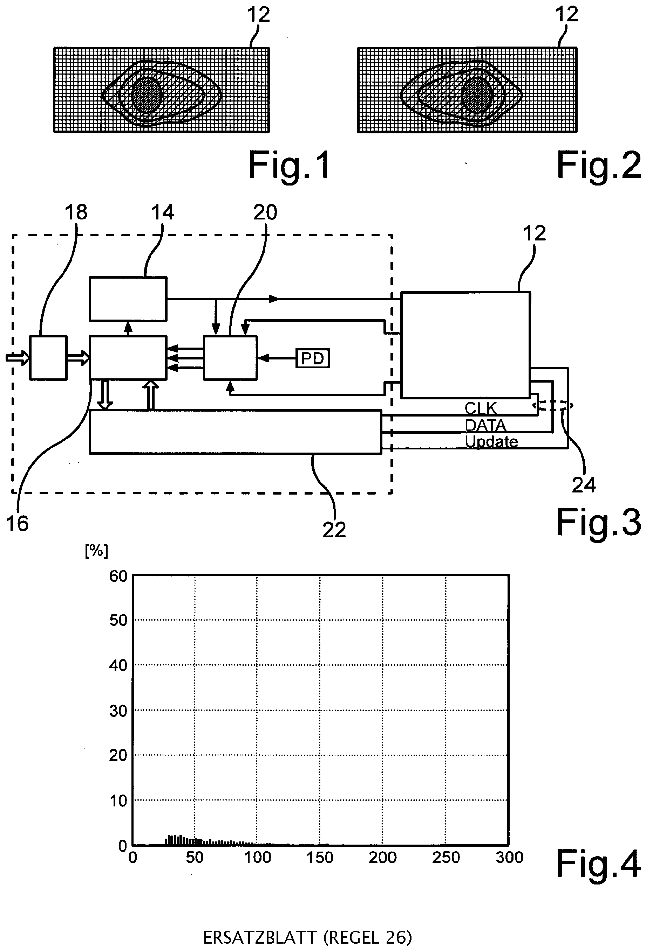

Fig. 1 stellt in einer schematischen Ansicht eine Draufsicht auf ein Leuchtmittel 12 mit einer Vielzahl von zu Matrizen verschalteten Leuchtdioden dar, welches Leuchtmittel für den Einbau in einen Fahrzeugscheinwerfer eines Fahrzeugs vorgesehen ist. Fig. 1 zeigt eine erste Lichtverteilung des Fahrzeugscheinwerfers in einem ersten Betriebszustand. In Fig. 2 ist der gleiche Scheinwerfer dargestellt, jedoch nunmehr in einem zweiten Betriebszustand, bei dem ein gegenüber Fig. 1 geändertes Leuchtmuster aktiviert ist. Das Leuchtmittel 12 weist eine nicht dargestellte flächige Unterlage auf, die eine Oberfläche bereitstellt, auf der rasterartig die Vielzahl von Leuchtdioden nebeneinander angeordnet ist. Die Leuchtdioden sind einzeln an eine Steuerungseinrichtung 10 (Fig. 3) einzeln angeschlossen.

Hierdurch ist es möglich, jede Leuchtdiode des Leuchtmittels 12 einzeln anzusteuern, um bedarfsgerecht gewünschte Beleuchtungseffekte zu erreichen.

Durch eine sich dynamisch ändernde Lichtverteilung des Leuchtmittels 12 ändert sich auch eine Lastverteilung über den Aufbau des Leuchtmittels 12. Aufgrund der Anwendung als Fahrzeugscheinwerfer ergibt sich vorliegend ein Strombedarf im zeitlichen Mittel von etwa 13 bis 18 A bei einer typischen Lichtverteilung, wie sie in den Fig. 1 und 2 dargestellt ist. Bei maximaler Lichtleistung ist eine Stromaufnahme in einem Bereich von 33 bis 46 A vorgesehen. Die Differenz zwischen den beiden Werten entspricht der Reserve, die beispielsweise für eine Beleuchtung beim Kurvenfahren vorbehalten werden soll. Daraus ergibt sich, dass sich auch die Stromverteilung beziehungsweise Leistungsverteilung über das Leuchtmittel 12 je nach Fahrsituation dynamisch ändert.

Die Möglichkeiten dieses Fahrzeugscheinwerfers werden auch für sicherheitsrelevante Funktionen genutzt, beispielsweise Spotlight zum Markieren von Gefahrenquellen.

Aufgrund der Nutzung von Leuchtdioden als Halbleiterlichtquellen sind die Zeitkonstanten für eine Änderung der Stromverteilung im Leuchtmittel 12 klein. Die Leuchtdioden weisen vorliegend im Wesentlichen gleiche physikalische Eigenschaften auf.

Vorliegend ist vorgesehen, dass das Leuchtmittel 12 eine Vielzahl von Leuchtdioden aufweist, und zwar 3.000 Leuchtdioden. In alternativen Ausführungsbeispielen können natürlich auch mehr als 3.000 Leuchtdioden für ein Leuchtmittel 12 vorgesehen sein. Die Leuchtdioden des Leuchtmittels 12 sind parallelgeschaltet und einzeln mit PWM als Taktimpulsfolge seitens der Steuerungseinrichtung 10 ansteuerbar. Wie im Folgenden noch weiter erläutert werden wird, umfasst die Steuerungseinrichtung 10 zu diesem Zweck einen elektronischen getakteten Energiewandler, der vorliegend als Tiefsetzsteller 14 ausgebildet ist.

Fig. 3 zeigt in schematischer Darstellung ein Blockschaltbild der Steuerungseinrichtung 10. Die Steuerungseinrichtung 10 ist an das Leuchtmittel 12 angeschlossen, so dass sämtliche Leuchtdioden des Leuchtmittels 12 einzeln von der Steuerungseinrichtung 10 gesteuert werden können. Die Steuerungseinrichtung 10 umfasst ferner den Tiefsetzsteller 14, der die elektrische Leistung zum Betrieb der Leuchtdioden des Leuchtmittels 12 bereitstellt. Schließlich umfasst die Steuerungseinrichtung 10 eine Rechnereinheit 16, die an eine Schnittstellenschaltung 18 angeschlossen ist, über die ein Anschluss an ein externes Kommunikationsnetzwerk möglich ist.

Ferner ist die Rechnereinheit 16 an den Tiefsetzsteller 14 angeschlossen und liefert Steuersignale zu dessen Betrieb. Schließlich ist die Rechnereinheit an eine analoge Signalverarbeitungseinheit 20 angeschlossen, die Signale des Leuchtmittels 12 sowie auch des Tiefsetzstellers 14 verarbeitet und entsprechende Signale an die Rechnereinheit 16 liefert. Darüber hinaus ist die Rechnereinheit 16 an einen Taktgeber 22 angeschlossen, der entsprechend einer Vorgabe der Rechnereinheit 16 Taktsignalfolgen im Sinne der Erfindung erzeugt und diese zum Steuern der Leuchtdioden des Leuchtmittels 12 an das Leuchtmittel 12 ausgibt. Darüber hinaus kann der Taktgeber 22 Signale an die Rechnereinheit 16 liefern, beispielsweise über aktuelle Betriebszustände, aktuell den Leuchtdioden zugeordnete Taktimpulsmuster und/oder dergleichen. Nicht dargestellt in der Fig. 3 ist, dass der Tiefsetzsteller 14 an ein elektrisches Bordnetz eines Kraftfahrzeugs angeschlossen ist, von dem er die elektrische Energie zum Betrieb der Steuerungseinrichtung 10 sowie des Leuchtmittels 12 bezieht.

Vorliegend ist vorgesehen, dass jede Leuchtdiode einzeln mit einem festgelegten Strom beziehungsweise einer festgelegten Leistung beaufschlagt werden kann. Zu diesem Zweck weist der Taktgeber 22 entsprechende, nicht dargestellte Schaltelemente auf. Die Steuerung einer mittleren Helligkeit der jeweiligen Leuchtdioden des Leuchtmittels 12 wird mittels einer Taktimpulsfolge realisiert, die auf PWM basiert. Aufgrund der Vielzahl der Leuchtdioden, hier 3.000, erfolgt die Ansteuerung der Leuchtdioden über Schaltelemente nicht direkt, sondern über eine serielle Schnittstelle 24. Die entsprechenden Schaltelemente sind stattdessen im Leuchtmittel 12 selbst angeordnet. Der Taktgeber 22 hat deshalb unter anderem die Aufgabe, innerhalb des Systems eine Signalvorverarbeitung vorzunehmen. Diese beinhaltet, dass die Umsetzung und Erstellung einer Lichtverteilung des Leuchtmittels 12 in eine auf die jeweilige einzelne individuelle Leuchtdiode des Leuchtmittels 12 geeignete abgestimmte PWM-Ansteuerung erfolgt. Entsprechende Parameter erhält der Taktgeber 22 von der Rechnereinheit 16. Die Rechnereinheit 16 hat des Weiteren innerhalb des Systems die Funktion, den Tiefsetzsteller 14 zu steuern, analoge Signale auszuwerten und dem Taktgeber 22 zur weiteren Verarbeitung zuzuführen.

Die Rechnereinheit 16 kann als eine parallel arbeitende Einheit mit hoher Verarbeitungsgeschwindigkeit ausgebildet sein. Vorliegend ist sie durch einen Halbleiterchip gebildet, der Bestandteil einer elektronischen Schaltung der Steuerungseinrichtung 10 ist.

Innerhalb des zuvor beschriebenen Systems stellt die Kombination aus einer Vielzahl getakteter Leuchtdioden für den Entwurf des Tiefsetzstellers 14 eine besondere Herausforderung dar. Dies wird anhand einer Darstellung gemäß Fig. 4 für das Leuchtmittel 12 als Fahrzeugscheinwerfer verdeutlicht. Bei dieser Ausgestaltung ist vorgesehen, dass etwa 45 % der zur Verfügung stehenden Leuchtdioden des Leuchtmittels 12 innerhalb einer Zykluszeit von höchstens 5 ms (200 Hz) geschaltet. Eine Helligkeitsänderung der in Fig. 4 dargestellten Grundlichtverteilung wird vorliegend durch PWM erreicht. Die nicht aktivierten 55 % der zur Verfügung stehenden Leuchtdioden stehen somit zur Verfügung, um weitere Beleuchtungsfunktionen umzusetzen, beispielsweise Sicherheitsfunktionen, Schwenkfunktionen oder dergleichen, und zwar ohne, dass mechanische Bewegungen realisiert werden müssten.

Wird für eine einzelne Leuchtdiode ein Betriebsstrom von 10 Milliampere angesetzt, und jeweils 1.000 Leuchtdioden gemeinsam von einem Tiefsetzsteller 14 mit elektrischer Energie versorgt, führt dies bei einer Auslastung von 45 % zu einem gepulsten Strom von 4,5 A. Dieser Strom ist im 5-ms-Rhythmus bereitzustellen, weshalb diese Randbedingung für den Entwurf des Tiefsetzstellers 14 als wesentliche Bedingung zu berücksichtigen ist. Wird hingegen der Strom betrachtet, der im zeitlichen Mittel innerhalb der genannten 5 ms genutzt wird, ergäbe sich ein Wert von ungefähr 1,33 A. Dieser Wert ist deutlich kleiner, weshalb bei Realisierung eines solchen Wertes der Tiefsetzsteller 14 hinsichtlich seiner Hardwareauslegung deutlich reduziert werden könnte.

Ein Merkmal der Erfindung ist, dass eine zeitliche Verschiebung der PWM-Zyklen, das heißt, der Taktimpulsfolgen, für die einzelnen Leuchtdioden untereinander realisiert werden kann, so dass Lastsprünge zu Beginn eines Zyklus deutlich reduziert werden können. Darüber hinaus wird die Möglichkeit eröffnet, Übergänge zwischen zwei Lichtzuständen des Leuchtmittels 12 durch Zwischenbilder beziehungsweise entsprechende Impulsmuster und dadurch realisierbare Interpolation derart zu gestalten, dass eine zeitliche Dynamik einer Stromänderung deutlich reduziert werden kann. Darüber hinaus ergibt sich dadurch eine Systemarchitektur, die auch eine vorausschauende, das heißt, proaktive Steuerung des Tiefsetzstellers 14 ermöglichen kann.

Die Erfindung greift diese Erkenntnis auf , die Leuchtdioden asynchron anzusteuern, das heißt, mit individuell zugeordneten Taktimpulsfolgen zu steuern, so dass Taktimpulse der ersten Taktimpulsfolge zeitlich verschoben zu Taktimpulsen einer zweiten Taktimpulsfolge liegen. Vorzugsweise gilt dies für mehrere, insbesondere alle Taktimpulsfolgen, die der Steuerung der Leuchtdioden des Leuchtmittels 12 dienen. Natürlich können mit einer Taktimpulsfolge auch mehrere Leuchtdioden des Leuchtmittels 12 zugleich betrieben werden, um die Anzahl der unterschiedlichen Taktimpulsfolgen zu begrenzen.

Insgesamt ist ein Aspekt der Erfindung, eine möglicht weitgehende zeitliche konstante Stromaufnahme erreichen zu können. Beispielsweise bedeutet dies, dass bei vier Leuchtdioden mit einer vorgegebenen mittleren Helligkeit von 25 % diese Leuchtdioden nicht synchron, sondern zeitversetzt nacheinander geschaltet beziehungsweise getaktet werden. Damit reduziert sich die Stromamplitude bei einer solchen Schaltung auf ¼ des Summenstromes, der im Falle der gleichzeitigen Aktivierung der Leuchtdioden anfallen würde. Dadurch können Spitzenströme und Amplituden von Stromsprüngen reduziert werden, womit auch die transienten Anforderungen an den Tiefsetzsteller 14 abnehmen. Dies führt zu einer deutlichen Verringerung von Kosten und Baugröße, da beispielsweise einfachere Spulen mit geringerer Induktivität eingesetzt werden können. Darüber hinaus kann der Wirkungsgrad des Tiefsetzstellers 14 verbessert werden.

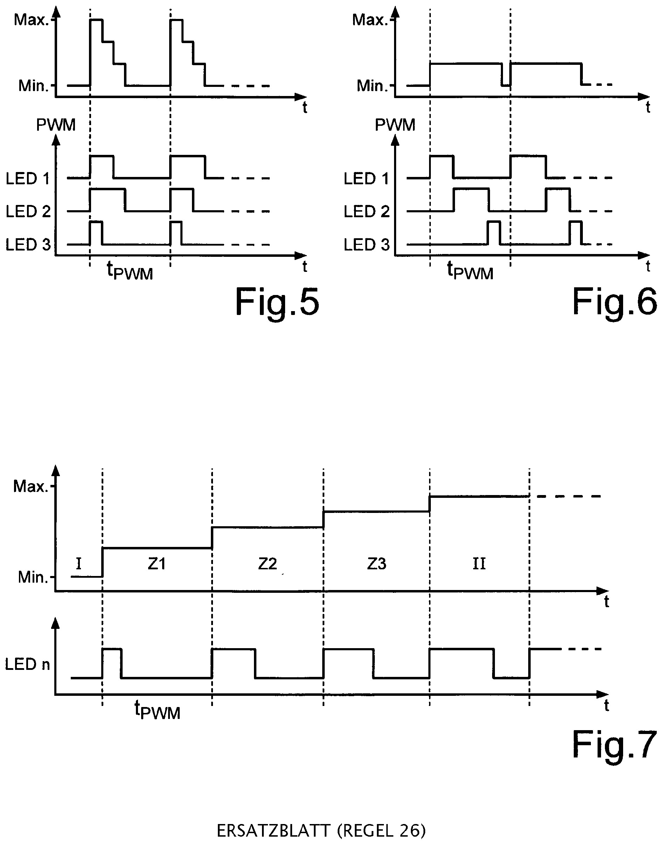

Fig. 5 zeigt beispielsweise zwei übereinander angeordnete zeitliche Diagramme, in denen schematisch ein Stromverlauf über der Zeit für einen Summenstrom von drei Leuchtdioden dargestellt ist, die gemäß dem unteren Diagramm entsprechend gesteuert werden. Zu erkennen ist, dass sich in einem kurzen Zeitintervall zu Beginn des Zeitintervalls t_{PWM} ein Strom in dreifacher Höhe zum Strom einer einzelnen Leuchtdiode einstellt. Fig. 6 zeigt eine Darstellung wie Fig. 5, jedoch sind im Unterschied zu Fig.5 die Betriebszeiten der drei Leuchtdioden entsprechend versetzt, so dass sie sich nicht überlappen. Dadurch entsteht der in Fig. 6 im oberen Diagramm dargestellte Stromverlauf, der lediglich noch eine Stromanforderung in Höhe des Stromes einer Leuchtdiode erfordert.

Auch bei dem in Fig. 7 dargestellten Verfahren gemäß der Erfindung ist die Motivation, die Anforderungen an den Tiefsetzsteller 14 zu reduzieren, indem große Stromsprünge vermieden werden.

Fig. 7 zeigt zwei übereinander geordnete Diagramme, wobei die Änderung von einem Betriebszustand I zu einem Betriebszustand II des Leuchtmittels 12 erreicht werden soll. Im oberen Diagramm in Fig. 7 ist die Stromaufnahme des Leuchtmittels 12 dargestellt, wohingegen im unteren Diagramm der Fig. 7 die entsprechenden Steuersignale für die Leuchtdioden dargestellt sind. Ausgehend vom Betriebszustand I wird zunächst mit einem ersten Steuersignal ein Zwischenbild Z1 erzeugt, das eine Stromaufnahme des Leuchtmittels 12 zur Folge hat, die größer als die des Betriebszustands I, aber kleiner als die des Betriebszustands II ist. In einem nächsten PWM-Zyklus wird ein zweites Zwischenbild Z2 aktiviert, welches eine Stromaufnahme des Leuchtmittels 12 zur Folge hat, die größer als die des Zwischenbildes Z1, aber kleiner als die des Betriebszustands II ist. In einem darauf folgenden Zyklus wird ein Zwischenbild Z3 erzeugt, welches eine Stromaufnahme des Leuchtmittels 12 zur Folge hat, die größer als die des Zwischenbildes Z2, aber kleiner als die des Betriebszustands II ist. Erst in einem folgenden Zyklus wird der Betriebszustand II erreicht. Durch diese Maßnahme kann ein steiler und großer Stromanstieg und die hiermit verbundenen Belastungen vermieden werden. Vorliegend beträgt die Zykluszeit etwa 5 ms.

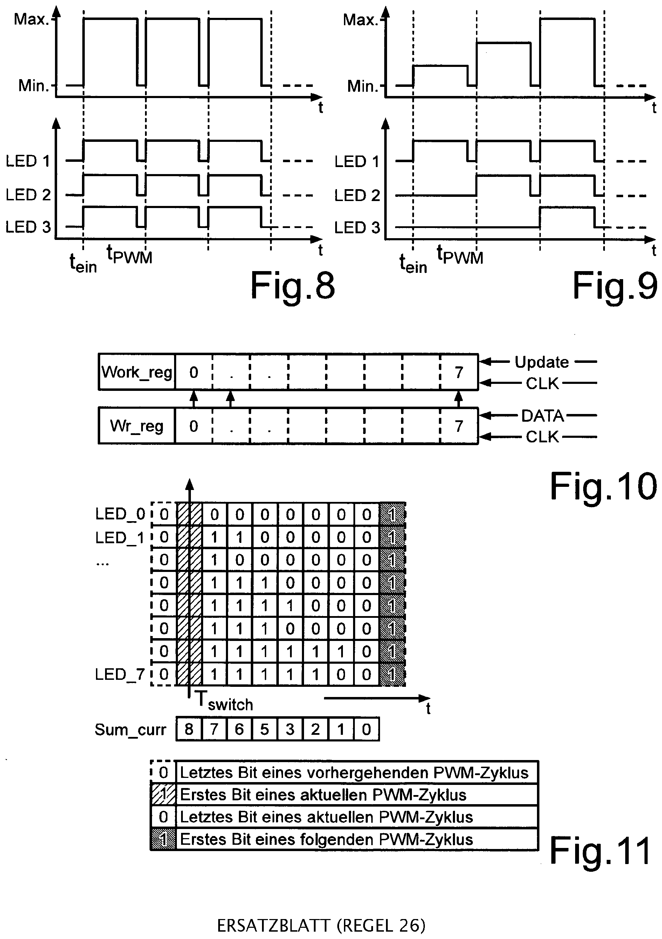

Diese Ausgestaltung eignet sich beispielsweise für den Fall der Nutzung des Fahrzeugscheinwerfers im Rahmen einer Lichthupenfunktion. Dabei wird der Zusammenhang genutzt, der zwischen einem PWM-Zyklus und einer zeitlichen Anforderung innerhalb der Anwendung als Fahrzeugscheinwerfer besteht. Bei einer beispielhaften Zykluszeit von 5 ms und einer Zeitspanne von 50 ms. Für das Erreichen des neuen Betriebszustands besteht demnach die Möglichkeit, 10 Zwischenbilder beziehungsweise Impulsmuster für den Übergang von einem Betriebszustand in den anderen Betriebszustand zu nutzen, um damit eine Amplitude von Stromsprüngen zu reduzieren. Daraus ergibt sich, dass bei einer deutlichen Änderung des Betriebszustands ein schrittweises Annähern durch Zwischenzustände in Form von Impulsmustern realisiert wird. Dieses Vorgehen kann auch, wie in Fig. 8 gezeigt, für das Einschalten des Fahrzeugscheinwerfers genutzt werden.

Fig. 8 zeigt zwei übereinander angeordnete Diagramme, die das Einschalten des Fahrzeugscheinwerfers über der Zeit darstellen. Im oberen Diagramm ist über der Zeit der jeweils aktuelle Strom des Leuchtmittels 12 dargestellt, wenn die Leuchtdioden gemäß dem unteren Diagramm entsprechend gesteuert werden. Zu erkennen ist, dass in diesem Fall ein großer Stromsprung beim Einschalten zum Zeitpunkt tₑᵢₙ erfolgt.

Fig. 9 zeigt nun zwei Diagramme wie Fig. 8, wobei auch hier wieder ein Einschaltzustand dargestellt ist, wobei dieser jedoch entsprechend der Erfindung ausgestaltet ist. Zu erkennen ist, dass die Leuchtdioden LED1 bis LED3 nicht, wie bei der Ausführung gemäß Fig. 8, gleichzeitig zum Zeitpunkt tₑᵢₙ eingeschaltet werden, sondern lediglich die Leuchtdiode LED1. Erst in einem folgenden Zyklus wird dann ergänzend die Leuchtdiode LED2 und in einem darauffolgenden Zyklus die Leuchtdiode LED3 eingeschaltet. Zu erkennen ist im oberen Diagramm der Fig. 9 ein entsprechend treppenartiger Anstieg des Stromverlaufs. Dadurch werden die großen Stromsprünge, wie sie bei einem Einschalten gemäß Fig. 8 entstehen, vermieden.

Eine weitere Ausgestaltung der Erfindung ergibt sich dadurch, dass Impulsmuster zur Realisierung von Zwischenbildern nicht linear interpoliert werden, um zum Beispiel der Natur des menschlichen Auges zu entsprechen und einen ergonomisch günstigen, visuellen Eindruck bereitstellen zu können.

Dadurch, dass die Information darüber vorliegt, welcher Betriebszustand des Leuchtmittels 12 eingenommen werden soll und gegebenenfalls welche Zwischenbilder zur Erreichung dieses Betriebszustands vorgesehen sind, besteht die Möglichkeit, den Tiefsetzsteller 14 auf die entsprechende Laständerung vorzubereiten.

Erhöht sich beispielsweise durch die Änderung des Betriebszustands des Leuchtmittels 12 die mittlere Stromaufnahme des Leuchtmittels 12, so besteht die Möglichkeit, die Ausgangsspannung sowie auch die Wandlerfrequenz vorausschauend beziehungsweise proaktiv entsprechend anzupassen. Dadurch kann erreicht werden, dass bei Eintreffen der Laständerung am Tiefsetzsteller 14 ein Einbruch zum Beispiel der Ausgangsspannung deutlich reduziert werden kann. Dadurch kann auch eine reduzierte Restwelligkeit des Stromes einer jeweiligen Leuchtdiode des Leuchtmittels 12 erreicht werden, weil ein Zusammenhang zwischen der an der Leuchtdiode anliegenden elektrischen Spannung und dem sie durchströmenden elektrischen Strom besteht. Des Weiteren besteht die Möglichkeit, den Tiefsetzsteller 14 durch Anpassung von Steuerparametern hinsichtlich seines Wirkungsgrads besser zu betreiben.

Zur technischen Umsetzung kann beispielsweise ein Registersatz zur Ansteuerung der Leuchtdioden des Leuchtmittels 12 genutzt werden, wie er beispielsweise anhand von Fig. 10 für die Ansteuerung von acht Leuchtdioden schematisch dargestellt ist und wie er vorliegende von der Steuerungseinrichtung 10 umfasst ist. Fig. 10 zeigt in schematischer Ansicht einen zweiteiligen Registersatz. Der Registersatz gemäß Fig. 10 umfasst ein Schreibregister Wr_reg, in welches seriell Daten eingeschrieben werden. Dabei repräsentiert jedes Bit dieses Registers den Betriebszustand einer einzigen Leuchtdiode. Zu diesem Zweck weist das Schreibregister Wr_reg einen Eingangsanschluss DATA und einen Takteingang CLK auf. In bekannter Weise werden seriell Daten in das Schreibregister eingeschrieben.

Der Registersatz gemäß Fig. 10 umfasst ferner ein an das Schreibregister angeschlossenes Arbeitsregister Work_reg, welches an das Schreibregister Wr_reg angeschlossen ist. Die in das Schreibregister eingeschriebenen Daten werden in entsprechende Speicherzellen des Arbeitsregisters Work reg übertragen, und zwar, indem ein entsprechendes Übernahmesignal an einem entsprechenden Steuereingang anliegt. Dieses Signal ist in Fig. 10 mit Update gekennzeichnet. Am Arbeitsregister Werk_reg sind die entsprechenden Schaltelemente zum Bestromen der entsprechenden Leuchtdioden angeschlossen. Wenn der Registerinhalt des Arbeitsregisters Work_reg eine logische 1 enthält, wird die entsprechend zugeordnete Leuchtdiode mit Strom beaufschlagt, so dass sie Licht erzeugt. Ist hingegen eine logische 0 in einer entsprechenden Registerzelle, wird die entsprechend zugeordnete Leuchtdiode nicht bestromt. Durch die Änderung der in den Speicherzellen des Arbeitsregisters Work reg gespeicherten Werte mittels des Schreibregisters Wr_reg in Kombination mit dem Update-Signal lässt sich für jede Leuchtdiode eine individuelle Taktimpulsfolge, hier PWM, abbilden. Auch das Arbeitsregister Work_reg weist einen Takteingang CLK auf, der vorzugsweise von dem gleichen Taktsignal wie das Schreibregister Wr_reg angesteuert sein kann.

Fig. 11 zeigt nun eine tabellarische Darstellung von Schaltzuständen von acht Leuchtdioden, wie sie mit dem Registersatz gemäß Fig. 10 angesteuert werden können. Der obere quadratische Block zeigt spaltenweise die zu den jeweiligen Zeitpunkten im Arbeitsregister Work reg enthaltenen logischen Werte für die jeweiligen Leuchtdioden gemäß einem Ausführungsbeispiel. Die in dem Block dargestellten Werte können natürlich bedarfsweise zur gewünschten Erzeugung einer Lichtleistung des Leuchtmittels 12 entsprechend angepasst sein. Unterhalb des obersten Blockdiagramms ist eine Zeile dargestellt, in der die logisch normierte Stromsumme dargestellt ist. Unterhalb dieser Zeile ist eine Legende für die unterschiedlichen Zeichen im obersten Block dargestellt. Wie sich aus Fig. 11 ergibt, ist ein Zeitpunkt mit einem senkrechten Pfeil markiert. Zu diesem Zeitpunkt werden sämtliche acht Leuchtdioden gleichzeitig eingeschaltet. In den Folgezeitpunkten reduziert sich schrittweise die Anzahl der aktiven Leuchtdioden, so dass sich die die darunter dargestellte normierte Strombelastung ergibt.

Dieser Sachverhalt führt dazu, dass ein großer Einschaltstrom entsteht, wie er bereits zuvor auch anhand der Fig. 5 und 6 erläutert worden ist.

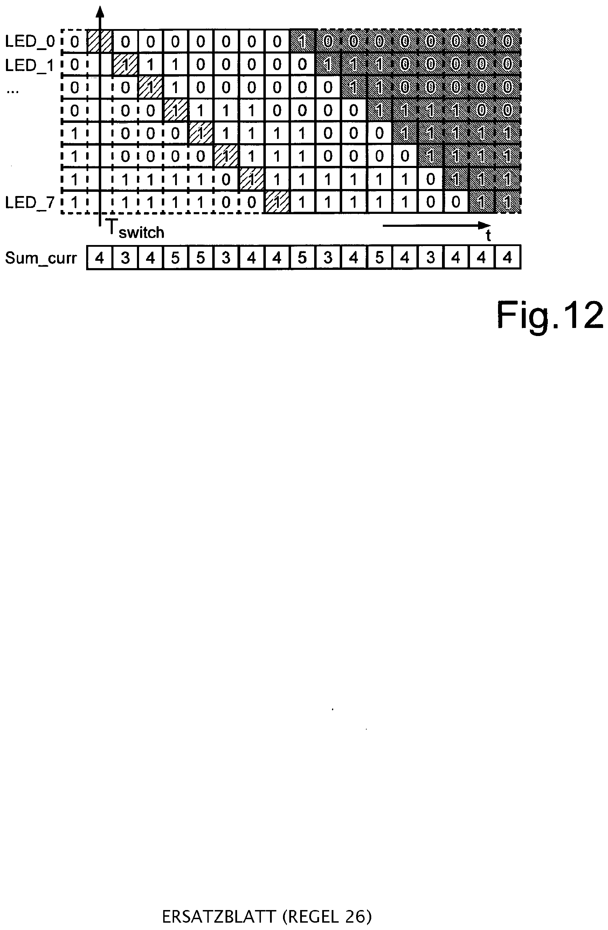

Fig. 12 zeigt nun eine Anordnung wie Fig. 11, jedoch sind bei dieser Anordnung die für die Leuchtdioden vorgesehenen Taktimpulsfolgen gegeneinander zeitlich verschoben. Zu erkennen ist aus Fig. 12, dass bei der dort dargestellten Verschiebung die normierte Stromsumme in jedem Taktzyklus zwischen den Werten 3 und 5 liegt. Durch diese Asynchronität der Taktimpulsfolgen für die Leuchtdioden kann also eine Vergleichmäßigung des Stromverbrauchs des Leuchtmittels 12 erreicht werden. Aus der unter dem Block in Fig. 12 dargestellten Stromsummenzeile ergibt sich, dass die Stromsummenwerte 0 bis 2 und 6 bis 8 nicht auftreten. Dies ist vorteilhaft für die Strombeanspruchung der restlichen Schaltung, insbesondere der Steuerungseinrichtung 10.

Die Verschiebung der Taktimpulsfolgen gegeneinander erfolgt durch eine Logik innerhalb des Taktgebers 22.

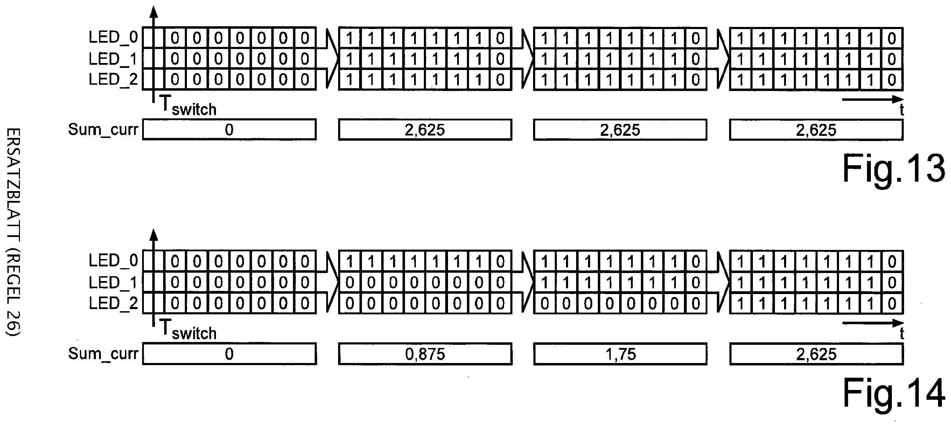

Fig. 13 und 14 zeigen im Vergleich ein Einschalten des Leuchtmittels 12. Fig. 13 zeigt einen Einschaltvorgang für drei Leuchtdioden des Leuchtmittels 12, die in konventioneller Weise gemeinsam eingeschaltet werden, und zwar von einer Leistung 0 zu einer Leistung von 87,5 %. Zur Darstellung sind vier zeitlich aufeinander folgende Blöcke mit logischen Schaltwerten dargestellt, wie sie bereits anhand der Fig. 11 und 12 erläutert worden sind. Vorliegend sind lediglich drei Leuchtdioden vorgesehen, die entsprechend geschaltet werden. Dem Grunde nach ist dies jedoch auf eine Beliebige Anzahl von Leuchtdioden anwendbar.

Auch hier ist wieder eine Leistungssteuerung mittels PWM vorgesehen. Dies ergibt sich aus den vier nebeneinander dargestellten Blöcken, die in Fig. 13 zeitlich aufeinander folgen. Im ersten linken Block sind sämtliche Leuchtdioden während des durch den ersten Block gebildeten ersten PWM-Zyklus ausgeschaltet. Am Ende des ersten Zyklus, das heißt, mit dem Übergang auf den zweiten, auf den linken Block folgenden Block, werden alle drei Leuchtdioden gleichzeitig eingeschaltet. Der eingeschaltete Zustand liegt über sieben Zyklen an. Als achter Zyklus sind alle drei Leuchtdioden gleichzeitig ausgeschaltet. Dies entspricht einem Einschaltverhältnis von 87,5 %. An den zweiten Block schließt sich ein identischer zweiter und dritter Block zeitlich an. Zu erkennen ist, dass die drei Leuchtdioden synchron ein- und ausgeschaltet werden. Unterhalb der jeweiligen Blöcke sind wieder die normierten Stromwerte angegeben, die über die Dauer eines jeden Blocks gemittelt vorliegen.

Fig. 14 zeigt nunmehr eine Abwandlung gemäß der Erfindung mit zwei Zwischenbildern als Impulsmustern, die ebenfalls wie Fig. 13 einen Einschaltvorgang repräsentieren. Die den Zwischenbildern zugeordnet Leistung liegt geringer als die Leistung im eingeschalteten Zustand, wobei die Leistung mit jedem weiteren Zwischenbild ansteigt, so dass ein im Wesentlichen treppenartiger Verlauf der Leistungsanstiegs die Folge ist.

Im Unterschied zum Einschaltvorgang gemäß Fig. 13 sind bei dem Einschaltvorgang gemäß Fig. 14 die drei Leuchtdioden nicht zugleich auf einmal eingeschaltet. Die Darstellung in Fig. 14 entspricht prinzipiell der Darstellung in Fig. 13, weshalb diesbezüglich auf die Fig. 13 ergänzend verwiesen wird. Zunächst sind in einem linken Block in Fig. 14 über die gesamte PWM-Periode alle drei Leuchtdioden ausgeschaltet. Im Übergang von dem linken Block auf den rechts angrenzenden Block wird zunächst lediglich die oberste Leuchtdiode LED_0 eingeschaltet, und zwar mit einem Tastverhältnis wie bei Fig. 13. Unter dem Block ist wieder, wie in Fig. 13, der mittlere Strom normiert dieses PWM-Zyklus dargestellt. Entsprechend ergibt sich ein normierter Strom von 0,875, da die Leuchtdiode LED 0 über sieben der acht Perioden des PWM-Zyklus eingeschaltet ist. Dieser Betriebszustand entspricht einem ersten Zwischenbild beziehungsweise ersten Impulsmuster. Daran schließt sich unmittelbar ein folgender Block an, bei dem ergänzend zu der obersten Leuchtdiode LED_0 nunmehr auch die mittlere Leuchtdiode LED_1 zeitgleich aktiviert ist. Hierdurch ist ein weiteres Zwischenbild gegeben. Es ergibt sich eine entsprechende Strombeanspruchung von 1,75. Schließlich schließt sich der vierte Block an, bei dem alle drei Leuchtdioden synchron eingeschaltet werden. Entsprechend ist nunmehr der eingeschaltete Zustand wie in Fig. 13 erreicht.

Aus Fig. 14 ist ersichtlich, dass der einschaltende Lastsprung, wie er in Fig. 13 auftritt, durch die Steuerung gemäß Fig. 14, das heißt ein sequentielles Zuschalten von Leuchtdioden, reduziert werden kann. Die Belastung, das heißt der Strom, ändert seinen Wert stufenartig von 0 auf den Wert im eingeschalteten Zustand, und zwar entsprechend der in jedem Folgezyklus zugeschalteten Leuchtdioden. In Fig. 14 sind die Einschaltzeitpunkte der Leuchtdioden somit zeitlich verschoben, und zwar in diesem Ausführungsbeispiel jeweils um einen PWM-Zyklus. Die sequentielle Verschiebung der Einschaltzeitpunkte der Leuchtdioden wird vorliegend ebenfalls durch den Taktgeber 22 realisiert.

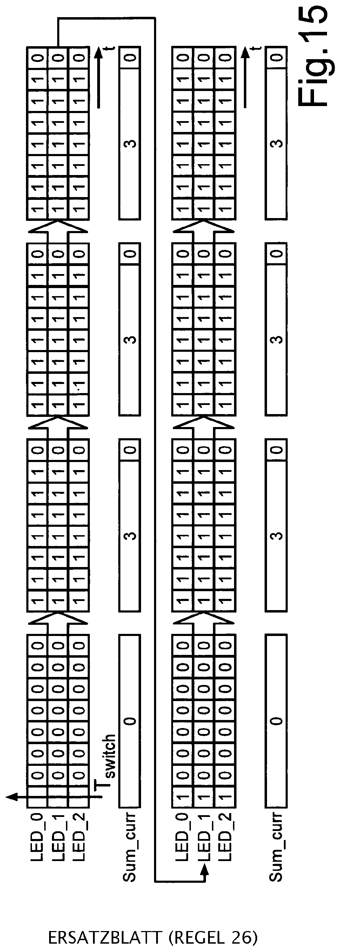

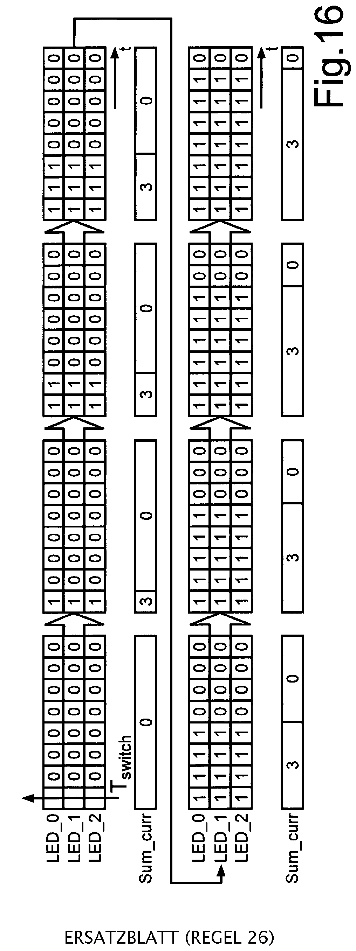

Eine weitere Ausgestaltung der Erfindung ergibt sich aus den Fig. 15 und 16. Diese betreffen das Dimmen von Leuchtdioden des Leuchtmittels 12 ebenfalls anhand von drei ausgewählten Leuchtdioden.

Fig. 15 zeigt einen konventionellen Einschaltvorgang, von dem schematisch in logischer Blockdarstellung acht PWM-Zyklen, die unmittelbar aufeinander folgen, dargestellt sind. Unterhalb der jeweiligen Blöcke ist wieder eine jeweilige normierte Stromsumme angegeben, wobei die normierte Stromsumme hier zyklusbezogen auf den jeweiligen Taktzyklus bezogen ist. Zu erkennen ist, dass, wie in Fig. 13, der erste linke Block oben in Fig. 15 mit Nullen besetzt ist, so dass die Leuchtdioden in diesem PWM-Zyklus ausgeschaltet sind. Beim Wechsel auf den rechts nebengeordneten Block werden alle Leuchtdioden, wie in Fig. 13 dargestellt, eingeschaltet. Die taktbezogene, normierte Stromsumme ist deshalb 3. Auch hier ist die Leistung auf 87,5 % eingestellt, da das Taktverhältnis des PWM-Zyklus sieben Achtel beträgt. Es folgen sechs weitere, identische PWM-Zyklen. Bezüglich der Auswirkungen wird ergänzend auf die Ausführungen zu Fig. 13 verwiesen.

Fig. 16 zeigt nun einen Einschaltvorgang wie Fig. 15, wobei hier die drei Leuchtdioden entsprechend gedimmt werden. Der obere linke Block ist wieder ein ausgeschalteter PWM-Zyklus, bei dem sämtliche drei Leuchtdioden ausgeschaltet sind. Es schließt sich rechts angrenzend ein Block an, bei dem ein Einschaltvorgang eingeleitet wird. Zu erkennen ist, dass die drei Leuchtdioden zunächst gemeinsam für einen ersten Takt des PWM-Zyklus eingeschaltet werden, wodurch ein erstes Zwischenbild gegeben ist. In den restlichen sieben Takten des PWM-Zyklus sind die Leuchtdioden ausgeschaltet. Daran schließt sich ein weiterer Block rechts angrenzend an, bei dem bereits bei zwei aufeinanderfolgende Taktperioden die Leuchtdioden eingeschaltet sind, wodurch ein zweites Zwischenbild gegeben ist. Die restlichen Takte dieses PWM-Zyklus sind alle drei Dioden wieder ausgeschaltet. Es folgt rechts angrenzend ein vierter PWM-Zyklus, der damit beginnt, dass die drei Leuchtdioden über die drei ersten Takte des PWM-Zyklus eingeschaltet sind, wodurch ein drittes Zwischenbild gegeben ist. Schließlich folgen unmittelbar darauf vier weitere PWM-Zyklen in einer unteren Blockdarstellung, bei denen jeweils der eingeschaltete Zustand mit fortlaufender Anzahl des PWM-Zyklus um einen Takt verlängert wird und die entsprechende Zwischenbilder bilden. Schließlich wird rechts unten im Block der Schaltzustand wie in Fig. 13 im rechten Block erreicht. Ein extremer Lastsprung kann auch hier vermieden werden, wenn die Helligkeitswerte der Leuchtdioden interpoliert werden können beziehungsweise gedimmt werden. Das Dimmen der Leuchtdioden kann ebenfalls durch den Taktgeber 22 realisiert sein.

Natürlich können die vorbeschriebenen Ausführungsbeispiele auch in zweckmäßiger Weise miteinander kombiniert werden, um zu weiteren Ausgestaltungen im Rahmen der Erfindung zu gelangen.

Ein Vorteil der beschriebenen technischen Merkmale ist, dass eine Reduktion von Anforderungen an den Tiefsetzsteller 14 erreicht werden kann. Durch die Interpolation von Bildübergängen beziehungsweise Impulsmustern mittels Zwischenwerten beziehungsweise Anpassen von Lastsprüngen auf eine tatsächlich erforderliche Dynamik kann die Dynamik der Strombeanspruchung beziehungsweise Leistungsbeanspruchung reduziert werden. Durch die Verschiebung der PWM-Zyklen der einzelnen Leuchtdioden zueinander ergibt sich eine Reduktion des maximal bereitzustellenden Summenstroms über die gesamte Leuchtdiodenstruktur des Leuchtmittels 12.

Beide Maßnahmen ermöglichen eine effizientere Auslegung des Tiefsetzstellers 14, weil dieser nicht die vollständige Dynamik des Systems, welches durch das Leuchtmittel 12 gebildet ist, abbilden braucht und eine Leistungsreserve reduziert werden kann. Hierdurch lässt sich die Komplexität der Leistungselektronik des Tiefsetzstellers reduzieren, wodurch Kosten eingespart werden können.

Darüber hinaus können Rückwirkungen auf ein Energieversorgungsnetz beziehungsweise die elektrische Energiequelle reduziert werden. Insbesondere kann Filteraufwand reduziert werden.

Insgesamt dient die vorangehende Beschreibung der Ausführungsbeispiele lediglich zur Erläuterung der Erfindung und soll diese nicht beschränken. Selbstverständlich wird der Fachmann bei Bedarf entsprechende Variationen vorsehen, ohne den Kerngedanken der Erfindung zu verlassen.

## Patentansprüche

1. Verfahren zum Steuern eines wenigstens zwei Halbleiterlichtquellen aufweisenden und an eine elektrische Energiequelle angeschlossenen Leuchtmittels (12), wobei
- das Leuchtmittel (12) eine von der elektrischen Energiequelle bereitgestellte elektrische Leistung mittels der Halbleiterlichtquellen in eine von der bereitgestellten elektrischen Leistung abhängige, emittierte Lichtleistung wandelt,
- die bereitgestellte elektrische Leistung mittels einer Steuerungseinrichtung (10) eingestellt wird, indem die Halbleiterlichtquellen mittels der Steuerungseinrichtung (10) mit elektrischer Leistung in einem Taktbetrieb beaufschlagt werden,
- die Halbleiterlichtquellen gemäß den Halbleiterlichtquellen individuell zugeordneter Taktimpulsfolgen gesteuert werden,
- die Taktimpulsfolgen ein gemeinsames Impulsmuster (I, II) bilden und die von dem Leuchtmittel emittierte Lichtleistung durch Auswahl eines der Lichtleistung zugeordneten Impulsmusters (I, II) eingestellt wird,
- zum Ändern der von dem Leuchtmittel emittierten Lichtleistung von einem ersten einer ersten emittierten Lichtleistung zugeordneten Impulsmuster (I) auf ein zweites einer zweiten emittierten Lichtleistung zugeordneten Impulsmuster (II) umgeschaltet wird, und **dadurch gekennzeichnet, dass**
- das Umschalten vom ersten auf das zweite Impulsmuster ein Zwischenschalten wenigstens eines dritten Impulsmusters (Z1, Z2, Z3) umfasst, welches einer Lichtleistung zwischen der ersten und der zweiten Lichtleistung zugeordnet ist, und
- die von der elektrischen Energiequelle bereitgestellte elektrische Leistung mittels eines elektronischen getakteten Energiewandlers (14) gewandelt wird, wobei der elektronische getaktete Energiewandler (14) mittels der Steuerungseinrichtung (10) proaktiv gesteuert wird, wobei
- das proaktive Steuern ein Übermitteln eines geeigneten Steuersignals an den elektronischen getakteten Energiewandler (14) umfasst, bevor eine Taktimpulsfolge und/oder ein Impulsmuster (I, II) mittels der Steuerungseinrichtung (10) aktiviert wird.

2. Verfahren nach Anspruch 1, **dadurch gekennzeichnet, dass** Taktimpulse einer ersten Taktimpulsfolge zeitlich verschoben zu Taktimpulsen einer zweiten Taktimpulsfolge liegen.

3. Verfahren nach einem der Ansprüche 1 bis 2, **dadurch gekennzeichnet, dass** die Taktimpulse einer ersten Taktimpulsfolge in Taktpausen einer zweiten Taktimpulsfolge liegen.

4. Verfahren nach einem der Ansprüche 1 bis 3, **dadurch gekennzeichnet, dass** an einem, vorzugsweise jedem, Taktimpuls der ersten Taktimpulsfolge jeweils ein Taktimpuls der zweiten Taktimpulsfolge zeitlich unmittelbar anschließt.

5. Verfahren nach einem der Ansprüche 1 bis 4, **dadurch gekennzeichnet, dass** die Taktimpulse der ersten Taktimpulsfolge über eine von den Taktimpulsen der zweiten Taktimpulsfolge abweichende Zeitdauer andauern.

## Claims

1. Method for controlling an illuminant (12) comprising at least two semiconductor light sources and connected to an electrical energy source, wherein
- the illuminant (12) converts an electrical power provided by the electrical energy source, by means of the semiconductor light sources, into an emitted light power dependent on the electrical power provided,
- the electrical power provided is set by means of a control device (10) by virtue of electrical power being applied to the semiconductor light sources in clocked operation by means of the control device (10),
- the semiconductor light sources are controlled in accordance with clock pulse sequences individually assigned to the semiconductor light sources,
- the clock pulse sequences form a common pulse pattern (I, II) and the light power emitted by the illuminant is set by the selection of a pulse pattern (I, II) assigned to the light power,
- switching over from a first pulse pattern (I) assigned to a first emitted light power to a second pulse pattern (II) assigned to a second emitted light power is carried out for the purpose of changing the light power emitted by the illuminant, and
**characterized in that**
- switching over from the first to the second pulse pattern comprises interposing at least one third pulse pattern (Z1, Z2, Z3) assigned to a light power between the first light power and the second light power, and
- the electrical power provided by the electrical energy source is converted by means of an electronic clocked energy converter (14), wherein the electronic clocked energy converter (14) is controlled proactively by means of the control device (10), wherein
- the proactive control comprises communicating a suitable control signal to the electronic clocked energy converter (14) before a clock pulse sequence and/or a pulse pattern (I, II) are/is activated by means of the control device (10).

2. Method according to Claim 1, **characterized in that** clock pulses of a first clock pulse sequence are temporally shifted with respect to clock pulses of a second clock pulse sequence.

3. Method according to either of Claims 1 and 2, **characterized in that** the clock pulses of a first clock pulse sequence lie in clock pauses of a second clock pulse sequence.

4. Method according to any of Claims 1 to 3, **characterized in that** in each case a clock pulse of the second clock pulse sequence is temporally directly adjacent to a, preferably each, clock pulse of the first clock pulse sequence.

5. Method according to any of Claims 1 to 4, **characterized in that** the clock pulses of the first clock pulse sequence last for a time duration that deviates from the clock pulses of the second clock pulse sequence.

## Revendications

1. Procédé de commande d'un moyen d'éclairage (12) présentant au moins deux sources de lumière à semi-conducteur et raccordé à une source d'énergie électrique,
- le moyen d'éclairage (12) convertissant une puissance électrique fournie par la source d'énergie électrique au moyen des sources de lumière à semi-conducteur en une puissance lumineuse émise dépendant de la puissance électrique fournie,
- la puissance électrique fournie étant réglée au moyen d'un dispositif de commande (10) par le fait que les sources de lumière à semi-conducteur sont, au moyen du dispositif de commande (10), alimentées en puissance électrique dans un mode cadencé,
- les sources de lumière à semi-conducteur étant commandées selon des trains d'impulsions d'horloge affectés individuellement aux sources de lumière à semi-conducteur,
- les trains d'impulsion d'horloge formant un schéma d'impulsions (I, II) commun, et la puissance lumineuse émise par le moyen d'éclairage étant réglée par la sélection d'un train d'impulsions (I, II) affecté à la puissance lumineuse,
- une commutation étant, afin de modifier la puissance lumineuse émise par le moyen d'éclairage, effectuée à partir d'un premier motif d'impulsions (I) affecté à une première puissance lumineuse émise vers un deuxième motif d'impulsions (II) affecté à une deuxième puissance lumineuse émise, et **caractérisé en ce que**
- la commutation du premier motif d'impulsions vers le deuxième motif d'impulsions comprend une interposition d'au moins un troisième schéma d'impulsions (Z1, Z2, Z3) qui est affecté à une puissance lumineuse entre la première et la deuxième puissance lumineuse, et
- la puissance électrique fournie par la source d'énergie électrique est convertie au moyen d'un convertisseur d'énergie (14) cadencé électronique, le convertisseur d'énergie (14) cadencé électronique étant commandé de façon proactive au moyen du dispositif de commande (10), et
- la commande proactive comprend une transmission d'un signal de commande approprié vers le convertisseur d'énergie (14) cadencé électronique avant qu'un train d'impulsions d'horloge et/ou un schéma d'impulsions (I, II) soit activé au moyen du dispositif de commande (10).

2. Procédé selon la revendication 1, **caractérisé en ce que** des impulsions d'horloge d'un premier train d'impulsions d'horloge sont temporellement décalées par rapport à des impulsions d'horloge d'un deuxième train d'impulsions d'horloge.

3. Procédé selon l'une des revendications 1 à 2, **caractérisé en ce que** les impulsions d'horloge d'un premier train d'impulsions d'horloge sont situées dans des temps d'arrêt d'un deuxième train d'impulsions d'horloge.

4. Procédé selon l'une des revendications 1 à 3, **caractérisé en ce qu'**une impulsion d'horloge, de préférence chaque impulsion d'horloge, du premier train d'impulsions d'horloge est respectivement suivie immédiatement dans le temps d'une impulsion d'horloge du deuxième train d'impulsions d'horloge.

5. Procédé selon l'une des revendications 1 à 4, **caractérisé en ce que** les impulsions d'horloge du premier train d'impulsions d'horloge se poursuivent pendant une durée qui diffère des impulsions d'horloge du deuxième train d'impulsions d'horloge.
